# EUROPEAN PATENT APPLICATION

(11) **EP 2 835 307 A1**
(43) Date of publication of application: **11.02.2015**
(21) Application number: 13879243.7
(22) Date of filing: 18.12.2013
(51) Int. Cl.: B62K 15/00

(54) **REVOLVABLE AND FOLDABLE BICYCLE FRAME**

(30) Priority: 14.05.2013 CN 201310176424
(71) Applicant: He, Xiangming, Changsha, Hunan 410600 (CN)
(72) Inventor: He, Xiangming, Changsha, Hunan 410600 (CN)
(74) Representative: Ferreccio, Rinaldo
(86) International application number: PCT/CN2013/089805
(87) International publication number: WO 2014/183436

(57) **Abstract**

The invention relates to a bicycle, and aims to provide a rotatable folding bicycle frame which is capable of effectively reducing the volume occupied by the bicycle body and is convenient to be placed and carried. The rotatable folding bicycle frame comprises a rear bicycle frame, a front bicycle frame and a seat tube, wherein a first rotation shaft is arranged at front side of the rear bicycle frame; a second rotation shaft is arranged at downside of the front bicycle frame; the first rotation shaft and the second rotation shaft are coaxial and can rotate with respect to each other; a first middle tube is arranged at the middle part of the rear bicycle frame; a second middle tube is arranged at the rear side of the front bicycle frame; the seat tube can be inserted in the first middle tube and the second middle tube; seat tube locking devices are respectively arranged outside the first middle tube and the second middle tube; when the two seat tube locking devices are locked, the front bicycle frame and the rear bicycle frame are connected into an integral bicycle frame; when the seat tube clocking devices are released, the seat tube can be pulled out from the two middle tubes, then the bicycle frame can be rotated and folded depending on the rotations of the front and rear bicycle frames about the first and second rotation shafts; therefore, the volume occupied by the bicycle body can be reduced and the bicycle can be conveniently placed and carried.

## Description

### TECHNICAL FIELD

The present invention relates to a bicycle, and more particularly, to a rotatable folding bicycle frame.

### BACKGROUND ART

The bicycle has become an indispensable traffic tool in our daily life. Generally, the bicycle includes a frame (a skeleton of the whole bicycle) serving as a basic structure of the bicycle and other parts, such as wheels, pedals, seat(s) and a handle, are directly or indirectly mounted to the frame. Therefore, the structure and performances of the bicycle frame are very important for the quality of the bicycle. Although some existing bicycles is foldable, most of them only can be folded in half via a shaft disposed between a beam and a rear supporting tube. In addition, the frame of most existing bicycles is generally made of ordinary carbon steel and copper tubes that are welded and assembled. The bicycle frame thus manufactured is heavy and bulky and is inconvenient in transportation and storage.

### SUMMARY

To solve the foregoing technical problems, an object of the present invention is to provide a rotatable folding bicycle frame, which allows an effective reduction of the volume occupied by the bicycle body, and a facilitates placing and carrying of the bicycle.

The rotatable folding bicycle frame according to the present invention comprises a rear bicycle frame, a front bicycle frame and a seat tube, wherein a first rotation shaft arranged at the front side of the rear bicycle frame and a second rotation shaft arranged at the downside of the front bicycle frame are coaxial and rotatable with respect to each other; the seat tube can be inserted in a first middle tube provided at the middle part of the rear bicycle frame and a second middle tube provided at the rear side of the front bicycle frame; seat tube locking devices are respectively provided outside the first and the second middle tubes in such a manner that the front and rear bicycle frames can be connected to form an integral bicycle frame when the tube locking devices are locked, and that the seat tube can be pulled out from said two middle tubes when said tube locking devices are released so that said bicycle frame can be rotated and folded through the front and rear bicycle frames about the first and second rotation shafts.

Further, a pin is provided within said first and second rotation shafts.

According to the technical solutions disclosed above, the rotatable folding bicycle frame of the present invention has at least following advantages: when the two seat tube locking devices are locked, the front and rear bicycle frames are connected into an integral bicycle frame; and when the seat tube clocking devices are released, the seat tube can be pulled out from the two middle tubes, then the bicycle frame can be rotated and folded under the rotation movements of the front and rear bicycle frames about the first and second rotation shafts, thereby reducing the volume of the bicycle body and facilitating the placement and carry of the bicycle.

### DESCRIPTION OF DRAWINGS

Fig. 1 is a structure diagram showing a rotatable folding bicycle frame according to the invention; and
Fig. 2 is a schematic diagram showing the bicycle frame in a rotated and folded state.

### MODE OF CARRYING OUT THE INVENTION

Specific implementations now will be described in more detail with reference to the accompanying drawings and embodiment. The following embodiments are used to illustrate this invention, but not intended to limit the scope thereof.

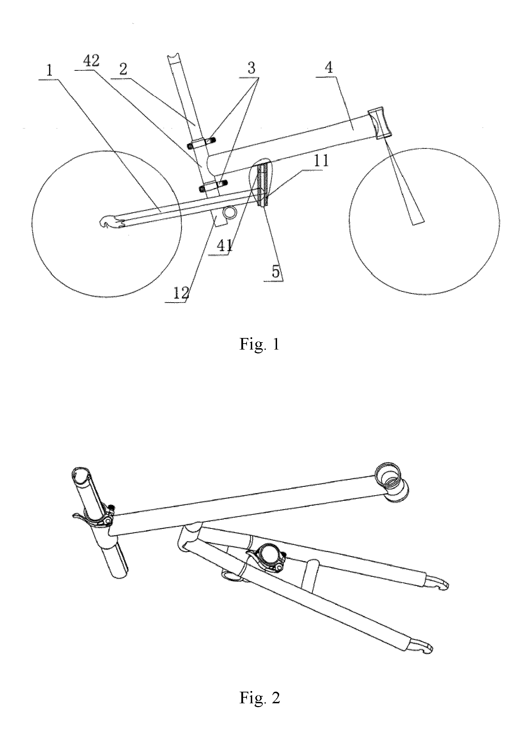

Referring to Figs. 1 and 2, a rotatable folding bicycle frame comprises a rear bicycle frame 1, a front bicycle frame 4 and a seat tube 2. The rear bicycle frame 1 is provided at its front side with a first rotation shaft 11 and the front bicycle frame 4 is provided at its downside with a second rotation shaft 41. The first rotation shaft 11 and the second rotation shaft 41 are coaxial and rotatable with respect to each other. A pin 5 is provided within the first rotation shaft 11 and the second rotation shaft 41. The rear bicycle frame 1 is provided at its middle part with a first middle tube 12 and the front bicycle frame 4 is provided its rear side with a second middle tube 42. The seat tube 2 can be inserted in the first middle tube 12 and the second middle tube 42. Seat tube locking devices 3 are respectively arranged outside the first middle tube 12 and the second middle tube 42. When the tube locking devices 3 are locked, the front bicycle frame 4 and the rear bicycle frame 1 are connected into an integral bicycle frame. When the tube locking devices 3 are released, the seat tube 2 can be pulled out from the two middle tubes, thus the front bicycle frame 4 and the rear bicycle frame 1 can rotate about the first rotation shaft 11 and the second rotation shaft 41 respectively so that the bicycle frame can be rotated and folded, thereby reducing the volume occupied by the bicycle body and facilitating the placement and carry of the bicycle.

The above description merely relates to a preferred embodiment of the present invention. It should be noted that various improvements and variations can be made for the skilled in the art without departing from the technical principle of the invention. These improvements and variations also should be interpreted as falling within the protection scope of the invention.

## Claims

1. A rotatable folding bicycle frame comprising
- a rear bicycle frame provided with a first rotation shaft at its front side and a first middle tube at its middle part;
- a front bicycle frame provided with a second rotation shaft at its downside and a second middle tube at its rear side, the second rotation shaft and the first rotation shaft being coaxial and rotatable with respect to each other;
- a seat tube which can be inserted into the first middle tube and the second middle tube; and
- seat tube locking devices provided outside said first middle tube and said second middle tube respectively,
wherein,
when the tube locking devices are locked, the front bicycle frame and the rear bicycle frame are connected into an integral bicycle frame; and
when the tube locking devices are released, the seat tube can be pulled out from the first middle tube and the second middle tube, and then the bicycle frame can be rotated and folded under the rotation movements of the front and rear bicycle frames about the first and second rotation shafts.

2. The rotatable folding bicycle frame according to claim 1, wherein a pin is provided within said first rotation shaft and said second rotation shaft.
